# EUROPEAN PATENT SPECIFICATION

(11) **EP 2 335 422 B1**
(45) Date of publication and mention of the grant of the patent: **25.12.2013**
(21) Application number: 09786327.8
(22) Date of filing: 05.03.2009
(51) Int. Cl.: H04Q 9/00, A62C 37/50

(54) **A MONITORING DEVICE FOR A FIRE-FIGHTING EQUIPMENT**
ÜBERWACHUNGSEINRICHTUNG FÜR EINE FEUERWEHRGERÄTSCHAFT
DISPOSITIF DE SURVEILLANCE POUR ÉQUIPEMENT DE LUTTE CONTRE L'INCENDIE

(30) Priority: 29.09.2008 IT RM20080514
(43) Date of publication of application: 22.06.2011
(73) Proprietor: Melli Automazione S.R.L., 20047 Brugherio (Milano) (IT)
(72) Inventor: MELLI, Costanzo, I-20047 Brugherio (Milano) (IT)
(74) Representative: Marchi, Paolo
(86) International application number: PCT/IB2009/050898
(87) International publication number: WO 2010/035150

(56) References cited:
- GB-A- 2 084 014
- US-A- 6 125 940
- US-A1- 2004 065 451
- US-A1- 2004 164 868

## Description

The present disclosure generally refers to the monitoring of fire-fighting installations and/or equipments. In particular, it refers to a monitoring device for a fire-fighting equipment, to an apparatus and a method for monitoring fire-fighting equipments, as well as to a fire-fighting equipment.

Fire-fighting equipments are normally subjected to periodic check of their efficiency and functionality. For instance, common fire extinguishers are usually subjected to six-monthly check.

Commonly marketed fire extinguishers are typically comprised of a hermetically sealed container containing a fire-fighting substance (e.g., a powder or water) kept under pressure by a compressed gas in said container, and a dispensing member. At the moment of use of the fire extinguisher, the gas under pressure acts as "motor" for dispensing a jet of fire-fighting substance.

In case of a manufacturing defect of the fire extinguisher, or of an erroneous assembly thereof, or of cracks on the container surface, or of gasket wear, or of other defects, it can happen, and unfortunately it often happens, that the container under pressure be no more perfectly tight, and accordingly there occurs a progressive leakage of gas under pressure from the container. This leakage may occur very slowly, therefore being undetectable during periodic maintenance, but can anyhow lead to a significant decay of the internal pressure, even in the course of some months. Hence, at the moment of use the gas pressure might be absolutely insufficient to dispense an effective jet of fire-fighting substance.

In an attempt at partially addressing this problem, known-art fire extinguishers are usually provided with an analog manometer reporting the pressure internal to the fire extinguisher. However, it is commonplace that such a manometer is substantially never read, if not in an absolutely incidental and fortuitous manner, by habitual frequenters/users of an environment equipped with fire extinguishers. In fact, fire extinguishers themselves over time tend to be seen almost as "part of the furniture" (therefore, paradoxically becoming "invisible"-like) and, anyhow, it is taken for granted that they will work. Only a tiny number of people occasionally, out of curiosity, get near a fire extinguisher to read its pressure from the manometer.

It follows that, in most cases, at the moment at which there is a need to use the fire extinguisher, the latter might be dangerously ineffective.

The above-mentioned drawback is amplified in the case of large buildings, of road tunnels, and generally of environments in which there is a large number of fire extinguishers. In this case, checking manometer pressures of fire extinguishers is time-consuming, owing to the large number of fire extinguishers arranged over a broad area. In fact, an operator has, in sequence, to get near to each individual fire extinguisher, read its pressure value, compare it with the minimum safety value, and report any anomaly.

US 2004/0065451 discloses an apparatus for remote inspection of emergency equipment at one or a system of emergency equipment stations. US 2004/0164868 discloses a carbon dioxide fire extinguishing device. US 6,125,940 discloses a fire extinguisher pressure alarm. GB 2 084 014 discloses a device for providing a simple indication of the serviceability of a gas cartridge-operated fire extinguisher. A technical problem at the basis of the present disclosure lies in providing a monitoring apparatus of fire-fighting equipments, that allows to overcome at least one of the drawbacks mentioned with reference to the known art, as well as to attain further advantages.

This is obtained by providing a monitoring apparatus according to claim 1. Secondary features of the above-mentioned apparatus are defined in the corresponding dependent claims thereof.

The above-mentioned technical problem is also solved by a method for a remote monitoring of fire-fighting equipments according to claim 15.

The above-mentioned apparatus provides several relevant advantages.

The main advantage of the above-defined monitoring apparatus lies in the fact that it allows a substantially continuous monitoring of the efficiency/functionality of the fire-fighting equipments on the basis of the metering of the quantity of fire-fighting substance in the equipment, and a real-time signaling, with actuation of an alarm, when said efficiency is at least partially compromised.

In other words, thanks to the meter it is continuously checked a real (actual) value of said quantity, and the relationship of such a real value with respect to a reference value, which normally is also referred to as threshold value. When the real value reaches and oversteps the threshold value, an alarm signal is generated. A second advantage lies in the fact that it makes evident, in a simple manner and at any moment, a possible malfunctioning of the fire-fighting equipment, preventing the need for an operator to periodically go to read a manometer placed on the fire extinguisher.

In other words, the fire-fighting equipment is unconstrained from a periodicity of checking, and above all from a checking mode of a type "discontinuous" over time; instead, it is ensured an automatic checking that is continuous over time, so as to guarantee that, at the moment at which the fire extinguisher actually has to be used, it be capable of fully carrying out its function, thereby allowing to reduce the risk of serious, and even tragic, consequences.

This advantage is all the more evident for the monitoring of broad areas or buildings equipped with a plurality of fire-fighting fire extinguishers, wherein the monitoring can occur in parallel for all fire extinguishers, to the advantage of a high saving of time. In this case as well it is a checking mode of a type "continuous" over time, much more frequent than law-envisaged periodic check, preventing for each fire extinguisher a lack of checking, even for a short time,.

In an embodiment, said meter is operatively connected to a second alarm element, which is actuated when the quantity metered by the meter is in a determined relationship with a second reference quantity. A suitable selection of the first reference quantity (hence of a first threshold value) and of the second reference quantity (hence of a second threshold value) allows to actuate, in a differentiated and selective manner, a first alarm element when the fire-fighting equipment begins to exhibit a decay in efficiency, the real value of the metered quantity being near or equal to the first threshold value, though remaining still usable, and a second alarm element when the fire-fighting equipment is near to a condition of substantial ineffectiveness, the real value of the metered quantity being near or equal to the second threshold value, therefore requiring immediate maintenance. This is advantageous from the standpoint of the management of fire-fighting equipment maintenance, since it allows to set up a sort of "hierarchy" of the urgency of maintenance interventions that are to be carried out.

Said "quantity related to the fire-fighting substance" may be, e.g., the pressure in a containing chamber made in the container, or the level of the fire-fighting substance in the chamber, the weight of the substance, or the amount of fire-fighting substance already previously dispensed from the equipment.

By the term "meter" it is meant in a broad sense a device capable of detecting said quantity or a variation of said quantity, such as a sensor, a transducer, or similar devices.

In an embodiment, the meter is a pressure meter, for instance a pressure transducer, and such metered quantity is therefore the pressure of the fire-fighting substance in the containing chamber; said determined relationship comes true when the metered pressure is lower than a reference pressure. Pressure metering is advantageous, since it is simpler with respect to other metering typologies, and moreover it is directly correlated to the functionality of the fire-fighting equipment. In fact, pressure metering allows to directly assess the efficiency of dispensing of the fire-fighting substance from the fire-fighting equipment. This holds true in particular in case of a fire-fighting equipment using as fire-fighting substance a powder substance or a liquid substance, e.g. water, which is kept under pressure in the container by a compressed gas.

In an embodiment, the meter is a weight meter, for instance a balance, and such metered quantity is the weight of the fire-fighting substance in the containing chamber; said determined relationship comes true when the metered weight is lower than a reference weight. Such an embodiment is, e.g., advantageously applicable to a fire-fighting equipment employing as fire-fighting substance a liquefied gas, e.g. carbon dioxide, pressure being a non-significant quantity since the fire-fighting substance is in vapor-liquid equilibrium and therefore the pressure of said substance essentially depends on the temperature, and not on the amount of fire-fighting substance present therein.

In an embodiment, the monitoring device comprises a power-supplying electric accumulator and a measurer of a charge level thereof, operatively connected to the meter. Preferably, to the charge measurer it is operatively connected a third alarm element which signals when the charge level is lower than a threshold value. This allows to prevent the monitoring device from unexpectedly going unserviceable owing to a lack of power-supplying.

In a preferred embodiment, at least one of said alarm elements is associated to a case of the monitoring device and therefore it is near to the fire-fighting equipment. This allows a person who is nearby the fire-fighting equipment to notice the less than complete functionality of the equipment and the need of a maintenance intervention. In particular, the alarm elements comprise luminous indicators provided into a dial, making further effective a communication to users with regard to the state of the equipment.

In an embodiment, the monitoring device comprises a wireless signal receiver/transmitter operatively connected to the meter; this allows to put into effect a remote monitoring of the fire-fighting equipment.

In an embodiment, the monitoring device comprises an electronic management unit, which may be connected to the meter, to the measurer, to the alarm elements, and/or to the wireless receiver/transmitter.

In an embodiment, it is provided a monitoring apparatus comprising at least one fire-fighting equipment provided with said monitoring device and a remote control unit operatively connected to said monitoring device by means of a signal transmission. In particular, a plurality of fire-fighting equipments is provided. From the remote unit it is possible to check state and conditions of all of the fire-fighting equipments, greatly simplifying the monitoring and checking modes thereof.

In an embodiment, such signal transmission is wireless and occurs between receivers/transmitters connected to the meters and a receiver/transmitter connected to the remote unit. Use of wireless transmission minimizes wiring requirements and poses no constraints to portability of fire-fighting equipments.

Further advantages, features and the operation modes of the subject of the present disclosure will be made evident in the following detailed description of some preferred embodiments thereof, given by way of example and not for limitative purposes.

However, evidently each embodiment of the present disclosure can have one or more of the above-listed advantages; anyhow, it is not required for each embodiment to concomitantly have all of the listed advantages.

Reference will be made to the figures of the annexed drawings, wherein:
- Figure 1 depicts a perspective view of a first embodiment of a monitoring device according to the present disclosure;
- Figure 1A depicts a partially sectional perspective view of the monitoring device of Figure 1;
- Figure 2 depicts a perspective view of a fire-fighting equipment, in the example a fire extinguisher, comprising the monitoring device of Figure 1;
- Figure 3 depicts a perspective view of a fire-fighting equipment, in the example a fire extinguisher, comprising a monitoring device according to the present disclosure in accordance with a second embodiment thereof;
- Figure 4 depicts a perspective view of a third embodiment of a monitoring device according to the present disclosure;
- Figure 5 depicts a first embodiment of a monitoring apparatus according to the present disclosure;
- Figure 6 depicts a second embodiment of a monitoring apparatus according to the present disclosure.

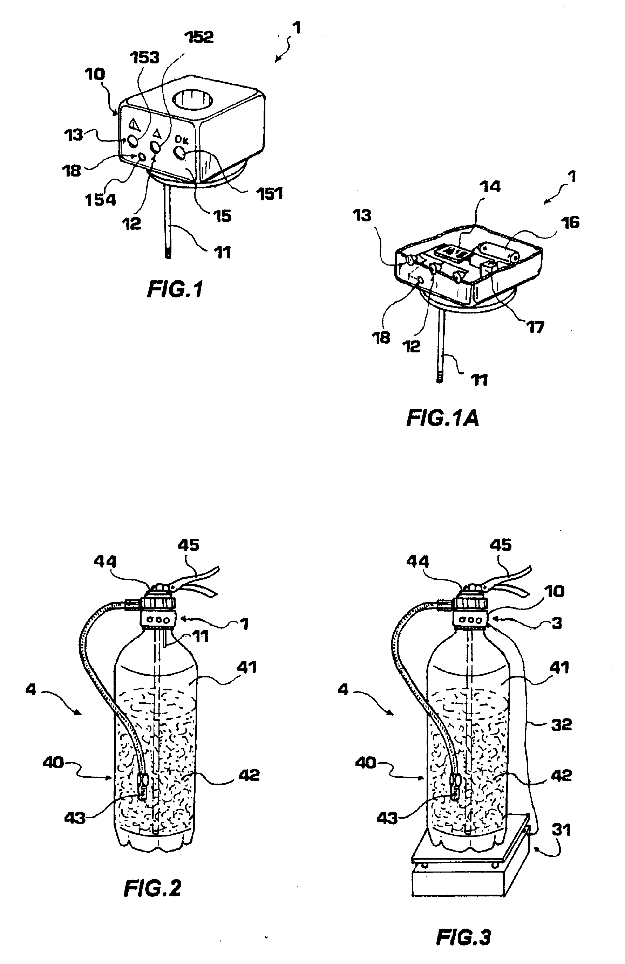

Referring initially to Figures 1, 1A and 2, by reference number 1 it is denoted a monitoring device adapted to the monitoring of a fire-fighting equipment, which in the example is a portable fire extinguisher 4. Said fire extinguisher 4 comprises a container 40, which in turn comprises a containing chamber 41 for a fire-fighting substance 42. The fire extinguisher 4 further comprises a dispenser 43 of fire-fighting substance 42, operatively connected to the chamber 41 by means of a duct provided with a valve 44, and an actuation lever 45 for said valve 44. In figure 2, the container 40 is depicted in phantom in order to display the inside of the chamber 41. The containing chamber 41, which is watertight, is kept under pressure, e.g. at 10 bar, by a gaseous fluid contained in the chamber 41 itself. Alternatively, there may be provided a pressurized gas bottle that is set in communication with the chamber 41 upon operation of the lever 45.

The monitoring device 1 comprises a meter 11 of a quantity related or correlated to the fire-fighting substance 42, in the example the pressure in the chamber 41 (or in the gas bottle), the level of the fire-fighting substance 42 in the chamber 41, or the amount of fire-fighting substance 42 already dispensed.

In the example, the monitoring device 1 comprises a box-shaped containing case 10, to which said meter 11 is associated.

The monitoring device 1 is adapted to be mounted on said fire-fighting equipment, and in the example on said fire extinguisher 4; in particular, it may be mounted in place of or side-by-side to the manometer with which fire extinguishers are usually provided.

In the example, the meter 11 is a pressure meter, in particular it is a piezoresistive pressure meter or transducer, adapted to detect pressure in said containing chamber 41, it being set in communication with said chamber 41, and adapted to emit an electric and/or electronic signal, corresponding to the detected pressure. The monitoring device 1 further comprises a first alarm element 12, which is operatively connected to said meter 11 and is actuated to signal when the quantity metered by the meter 11 (i.e., the actual value of the quantity) is in a determined relationship with a first reference quantity, said relationship being set so as to identify a loss of efficiency and/or of functionality by the fire-fighting equipment. In the example, said first alarm element 12 is actuated when the pressure metered by the pressure meter 11 is lower than a first reference pressure. Connection between the first alarm element 12 and the meter 11 is made, e.g., by means of electric cables.

The first alarm element 12 is associated to the case 10.

Optionally, the monitoring device 1 comprises a second alarm element 13, it also operatively connected to said meter 11, which is actuated when the quantity metered by the meter 11 is in a determined relationship with a second reference quantity, said relationship being set so as to identify a substantial unserviceability of the fire-fighting equipment. In the example, said second alarm element 13 is actuated when the pressure metered by the pressure meter 11 is lower than a second reference pressure, which is lower than said first reference pressure. In this case as well, the second alarm element 13 is associated to the case 10 and connection between the second alarm element 13 and the meter 11 is made, e.g., by means of electric cables.

The monitoring device 1 comprises an electronic management unit 14, which is operatively connected to the meter 11; furthermore, the unit 14 is operatively connected to said first alarm element 12 and/or second alarm element 13. Connections between management unit 14 and alarm elements 12, 13 are made, e.g., by means of electric cables.

The electronic management unit 14 is adapted to process the measure of pressure (or, more generally, quantity) provided by the meter 11 and compare it with the first reference pressure and the second reference pressure; in case one of said determined relationships comes true, the electronic unit 14 actuates the corresponding alarm element 12 or 13.

In the example, the monitoring device 1 comprises a dial 15 on the case 10, provided with at least one luminous indicator, e.g. of LED type.

A first LED indicator 151, green-colored, is kept on when metered pressure is higher than the first reference pressure (in the example, 8 bar) and the second reference pressure (in the example, 5 bar), indicating that the fire extinguisher 4 is in normal conditions of efficiency.

A second LED indicator 152, yellow-colored, being part of the first alarm element 12, is turned on when metered pressure is lower than the first reference pressure, but higher than the second reference pressure, thereby indicating that the fire extinguisher 4 has some problem but can still be used.

A third LED indicator 153, red-colored, being part of the second alarm element 13, is turned on when metered pressure is lower than the second reference pressure, indicating that the fire extinguisher 4 is nearing unserviceability, therefore requiring immediate maintenance.

The LED indicators 152, 153 can be assisted (or even replaced) by acoustic alarms. From the above it is evident that the monitoring device 1 continuously attends to operation of the fire extinguisher 4, in particular by continuously monitoring the pressure internal to the chamber 41, in order to check its operative efficiency. The monitoring device 1, also thanks to the electronic management unit 14, locally operates a sort of "diagnosis" over time of the efficiency of the fire extinguisher 4 on the basis of metered pressure, and consequently actuates the LED indicators 151, 152, 153. The use of such luminous indicators, in particular differently colored ones according to the result of said diagnosis, is advantageous also due to the fact that they easily attract the attention of a person passing by the fire extinguisher 4, who would have immediate perception of any malfunctioning of the fire extinguisher 4 itself, and might therefore signal it to whom it may concern.

Moreover, the same luminous indicators, easily visible even at a distance of some meters, make easier and quicker the task of an operator in charge of checking that a certain number of fire extinguishers 4 have a correct pressure, as the operator might check this simply by walking by the fire extinguishers 4, with no need to get near and stop close to each fire extinguisher 4 to read its pressure on the manometer, as instead occurs with known-art fire extinguishers.

The monitoring device 1 further comprises an electric battery 16 (or other typology of electric accumulator) for an autonomous power-supplying of the meter 11 and of the alarm elements 12, 13, and a measurer 17 of a charge level of the battery 16. For instance, said measurer 17 comprises a voltmeter or an amperometer. A third alarm element 18 is operatively connected to said charge measurer 17, e.g. by means of the management unit 14, and is actuated when the charge level of the battery 16 is lower than a threshold level. The third alarm element 18 comprises, e.g., a luminous indicator, such as a fourth LED 154 provided in said dial 15, and therefore it also associated to the case 10.

The fourth LED 154 is for instance kept on, or blinking, when said charge level is lower than the threshold level.

This allows to prevent that the monitoring of the fire extinguisher 4 be interrupted by lack of power-supplying. In fact, the need to replace the electric battery 16 is signaled in time just by the third alarm element 18. Anyhow, in the example the electric battery 16 is provided to have a life of some years, and the threshold level of charge is preferably selected with a value such as to however allow operation of the monitoring device 1 over a time interval long enough to be higher than the time interval between two subsequent law-envisaged periodic overhauls of the fire extinguisher 4. Therefore, the risk of the monitoring device 1 remaining without power-supplying is substantially eliminated, and the technicians in charge of the overhaul will have to check the battery 16 and optionally replace it.

The monitoring device 1 may further comprise an operation time computer, managed by means of the management unit 14, e.g. a counter, or chronometer, counting the number of hours elapsed since the carrying out of the last periodic maintenance. This allows to electronically record and check the approaching of the next periodic maintenance, and optionally transmit an alert signal when the deadline for periodic maintenance is approaching. The operation hour counter is reset back to zero at the carrying out of the periodic maintenance. To this end, by way of example, the monitoring device comprises an optical sensor, such as a photodiode, operatively connected to the management unit 14, adapted to interact with an optical pen brought by a maintenance technician, and capable of recognizing a determined wavelength transmitted by the optical pen, and of transforming this event into an electric current signal, which determines the resetting to zero of the counter. In practice, the counter is reset to zero merely by nearing the optical pen to the corresponding optical sensor.

Figure 3 shows a fire-fighting equipment, in the example a fire extinguisher 4, comprising a monitoring device adapted to the monitoring of the fire-fighting equipment itself, made in accordance to a second embodiment, and denoted by reference number 3. In particular, the fire extinguisher 4 is of the type employing a liquefied gas, e.g. carbon dioxide, as fire-fighting substance.

For this second embodiment, elements having the same function and structure keep the same reference number of the aforedescribed embodiment, and therefore will not be detailed again.

The monitoring device 3 comprises a weight meter, in the example an electronic balance 31 on which the fire extinguisher 4 rests, and which is adapted to generally weigh the fire extinguisher 4. The management unit 14 is operatively connected to the balance 31, e.g. by means of an electric cable 32 or of a wireless transmission. In other words, the overall weight value of the fire extinguisher 4, metered by the balance 31, is transmitted to the management unit 14. The weight of the fire-fighting substance 42 in the containing chamber 41 is easily calculated by difference from the overall weight of the fire extinguisher 4, once known the empty weight (or tare) thereof.

Operation of the monitoring device 3 is analogous to that of the monitoring device 1 described in the foregoing.

In particular, a first alarm element 12 is actuated when the weight of fire-fighting substance metered by the balance 31 is lower than a first reference weight.

A second alarm element 13 is actuated when the weight metered by the balance 31 is lower than a second reference weight, which is lower than said first reference weight.

In fact, from the metering of the weight of fire-fighting substance it is possible to estimate how much fire-fighting substance has already been used or discharged with respect to the initial charge, and therefore to estimate the amount of fire-fighting substance still present in the fire extinguisher 4, and assess whether such amount is sufficient for an effective use of the fire extinguisher 4.

This proves particularly advantageous for fire extinguishers employing a liquefied gas as fire-fighting substance, since for these fire extinguishers the pressure value inside the chamber 41 is scarcely significant, it being independent from the amount of fire-fighting substance actually present, and therefore the metering of only pressure does not suffice for an effective monitoring of the fire extinguisher functionality.

The connection between the case 10 of the device 3 and the electric cable 32 is of an easily removable type, e.g. it comprises a plug removably housed in a respective seat, so that a user may use the fire extinguisher 4 without being hampered by the cable 32.

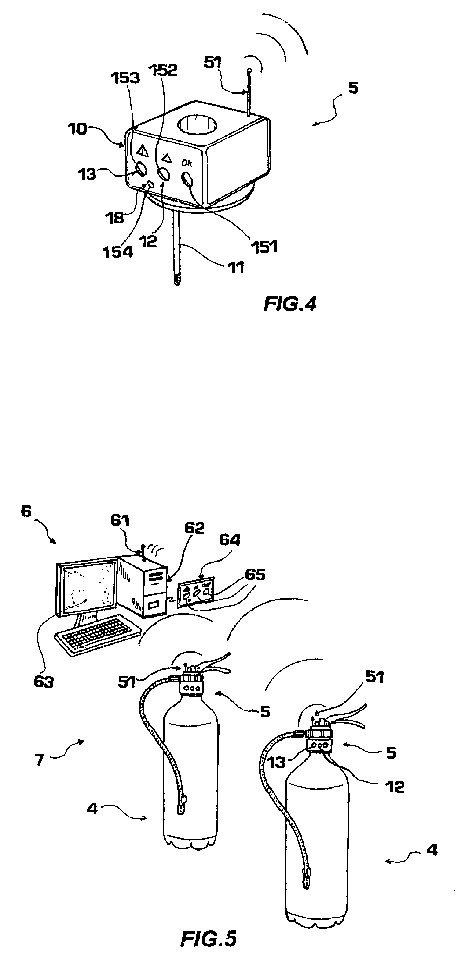

Figures 4 and 5 show a third embodiment, denoted by reference number 5, of a monitoring device adapted to the monitoring of a fire-fighting equipment, in particular a fire extinguisher 4.

For this third embodiment, elements having the same function and structure keep the same reference number of the aforedescribed embodiments, and therefore will not be detailed again.

Specifically, the monitoring device 5 mainly differs from the hereto-described monitoring devices 1 and 3 owing to the fact of comprising means for the remote connection with a remote control unit 6: thanks to said means, the monitoring device 5 is operatively connected to the remote control unit 6 by means of a signal transmission.

More specifically, the monitoring device 5 comprises a first wireless signal receiver/transmitter 51, which is operatively connected to one or more of said first 12, second 13, and third 18 alarm element. The first wireless signal receiver/transmitter 51 communicates, in the example by means of radio waves, with a second wireless signal receiver/transmitter 61 which is comprised in said remote control unit 6.

Even more specifically, the first receiver/transmitter 51 is comprised in the electronic management unit 14.

The remote control unit 6 comprises said second receiver/transmitter 61, a processor 62 operatively connected to said second receiver/transmitter 61, a display 63, and a remote alarm 64. In the remote control unit 6 it is installed a software for the management of the remote control unit 6, said software being processed by the processor 62.

Hereinafter it is described the operation of a monitoring apparatus 7 of at least one fire extinguisher 4, or a similar fire-fighting equipment, wherein said monitoring apparatus 7 comprises said remote control unit 6 and at least one monitoring device 5 mounted on said at least one fire extinguisher 4. Such a monitoring apparatus 7 finds application, for instance, on stores, plants, schools, hospitals, public premises, offices.

The monitoring device 5 monitors the pressure internal to the chamber 41 of the respective fire extinguisher 4 and, via the first receiver/transmitter 51, transmits to said second receiver/transmitter 61 a signal related to the metered pressure.

The processor 62 processes said signal and displays, e.g. on the display 63, the state of the fire extinguisher 4, so that this information is visible to an operator using the remote control unit 6.

When the pressure is lower than the first reference pressure or the second reference pressure, the corresponding first alarm element 12 or second alarm element 13 comprised in the monitoring device 5 are actuated; moreover, the remote control unit 6 signals the problem by means both of the display 63 and of the actuation of the remote alarm 64. The remote alarm 64 may comprise various further alarm elements (e.g., luminous indicators 65) which are actuated by the same actuation logic already described for said first alarm element 12 and second alarm element 13. Alternatively, the remote alarm 64 may not be comprised in a physically distinct unit, but may instead be implemented by means of the sole displaying on the display 63.

Moreover, the remote control unit 6 also receives signals related to the charge level of the battery 16, metered by the measurer 17. In case the charge level is lower than the threshold level, the remote control unit 6 displays this on the display 63 and actuates a corresponding alarm. Therefore, the remote control unit 6 behaves as a central control unit, reporting and replicating the actuations of the alarm elements 12, 13 and 18 of the monitoring device 5.

In case a plurality of fire extinguishers 4 are provided, each equipped with a respective monitoring device 5 (for instance, one thousand fire extinguishers 4), an operator using said remote control unit 6 can concomitantly (and continuously) check the state of all of the fire extinguishers 4 and immediately detect any anomalies.

Besides the aforedescribed alarms, the remote control unit 6 can monitor and signal also the fact that a fire extinguisher 4 has been removed from its intended seat, if the fire extinguisher 4 is moved away beyond a certain distance making wireless transmission ineffective, or by signaling by a suitable presence sensor of the fire extinguisher 4. In these cases, it is envisaged that the remote control unit 6, by not receiving anymore a signal from said fire extinguisher 4, or recognizing the absence of the fire extinguisher 4, signals the anomaly to the operator by means of the display 63 or with a related alarm.

Moreover, the remote control unit 6 may, e.g., transmit alarm signals by SMS to enabled telephones, by e-mail to a local network or to an external network by web, by a data transmission to a enabled website, and can in turn be controlled by a local network or by web.

The remote control unit 6 can further store the technical data of each fire extinguisher 4, detect, by suitable receiving/transmitting devices, the operation and the count performed by the above-mentioned computer (or chronometer) and correlate this information with law-envisaged deadlines for the maintenance of each fire extinguisher 4; therefore it is adapted to manage also aspects related to programming of the periodic checking.

In another embodiment (not shown), the monitoring device 5 does not comprise said first 12, second 13 and third 18 alarm element, which are comprised only in said remote control unit 6. In this case, the meter 11 is connected by wireless transmission to the alarm elements 12, 13, 18.

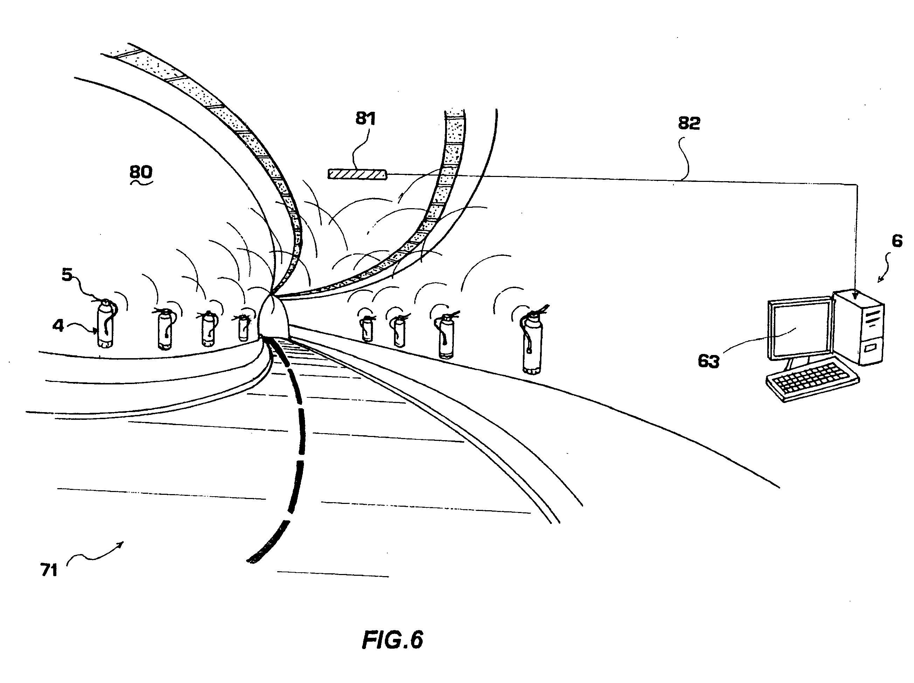

A second embodiment of a monitoring apparatus, denoted by 71, is shown in Figure 6, which depicts a road tunnel 80 equipped with a plurality of fire extinguishers 4, each one equipped with a monitoring device 5. The monitoring devices 5, according to the above-described modes, transmit wireless signals to a third receiver/transmitter 81 placed inside the tunnel 80, which is operatively connected, by means of a cable 82, to a central remote control unit 6 housed in a control room located outside of the tunnel 80. This configuration overcomes the problem related to the insufficient transmission of radio signals through rock layers.

The present invention has been hereto described with reference to preferred embodiments thereof.

It is understood that other embodiments might exist, all falling within the concept of the same invention, and all comprised within the protective scope of the claims hereinafter.

## Claims

1. A monitoring apparatus (7, 71) for checking state and condition of a plurality of fire-fighting equipments (4), each fire-fighting equipment (4) being of the type comprising a container (40) of a fire-fighting substance (42), the monitoring apparatus (7, 71) comprising a plurality of monitoring devices (1, 3, 5) and a remote control unit (6) operatively connected to each of said monitoring devices (1, 3, 5) by means of a signal transmission,
wherein each monitoring device (1, 3, 5) is adapted to be associated to a respective fire-fighting equipment (4) and comprises a meter (11, 31) of a quantity related to said fire-fighting substance (42) in said container (40),
the remote control unit (6) comprising a first alarm element (12, 64, 65) operatively connected to said meters (11, 31) and adapted to signal when the quantity metered by the meter (11, 31) of a monitoring device (1, 3, 5) of said plurality is lower than a first reference quantity,
**characterized in that**
the remote control unit (6) further comprises a second alarm element (13, 64, 65) operatively connected to said meters (11, 31) and adapted to signal when the quantity metered by the meter (11, 31) of said monitoring device (1, 3, 5) of said plurality is lower than a second reference quantity,
the second reference quantity being lower than the first reference quantity,
the actuation of the first alarm element (12) corresponding to an initial decay in efficiency of a fire-fighting equipment (4) and the actuation of the second alarm element (13) corresponding to a substantial unserviceability of the fire-fighting equipment (4).

2. The monitoring apparatus (7, 71) according to claim 1, wherein each monitoring device (1, 3, 5) comprises a first wireless signal receiver/transmitter (51) operatively connected to said meter (11, 31) and said remote control unit (6) comprises a second wireless signal receiver/transmitter (61, 81), said signal transmission being a wireless transmission between the first wireless signal receivers/transmitters (51) and the second wireless signal receiver/transmitter (61,81).

3. The monitoring apparatus (7, 71) according to claim 1 or 2, wherein each monitoring device (1, 3, 5) comprises a power-supplying electric accumulator (16) and a measurer (17) of a charge level of said electric accumulator (16), the remote control unit (6) comprising a third alarm element (18, 64, 65) operatively connected to said measurers (17) and adapted to signal when the charge level metered by one of said measurers (17) is lower than a threshold level.

4. The monitoring apparatus (7, 71) according to claim 1, 2 or 3, wherein said remote control unit (6) comprises a remote alarm (64) and is configured for controlling an actuation of said remote alarm (64),
the remote alarm (64) comprising at least one among said first alarm element (12, 65), said second alarm element (13, 65), and said third alarm element (18, 65), said remote control unit (6) being configured for controlling an actuation of said at least one of said first alarm element (12, 65), second alarm element (13, 65), and third alarm element (18, 65).

5. The monitoring apparatus (7, 71) according to any one of claims 1 to 4, wherein each monitoring device (1, 3, 5) comprises a first alarm element (12), which is adapted to signal when the quantity metered by the meter (11, 31) is lower than the first reference quantity, and a second alarm element (13), which is adapted to signal when the quantity metered by the meter (11, 31) is lower than the second reference quantity.

6. The monitoring apparatus (7, 71) according to any one of claims 1 to 5, wherein each monitoring device (1, 3, 5) comprises a power-supplying electric accumulator (16), a measurer (17) of a charge level of said electric accumulator (16), and a third alarm element (18), wherein said third alarm element (18) is adapted to signal when the charge level metered by said measurer (17) is lower than a threshold level.

7. The monitoring apparatus (7, 71) according to claim 5 or 6, wherein each monitoring device (1, 3, 5) comprises a containing case (10), wherein at least one among said first alarm element (12), said second alarm element (13), and said third alarm element (18) is associated to said containing case (10).

8. The monitoring apparatus (7, 71) according to any one of claims 1 to 7, wherein at least one among said first alarm element (12, 65), second alarm element (13, 65), and third alarm element (18, 65) comprises a luminous indicator (152, 153, 154).

9. The monitoring apparatus (7, 71) according to any one of claims 1 to 8, wherein said meter (11) is a pressure meter, and said metered quantity and said reference quantity are a metered pressure of said fire-fighting substance (42) in said container (40) and a reference pressure, respectively, each monitoring device (1, 5) being adapted to check when said metered pressure is lower than said reference pressure.

10. The monitoring apparatus (7, 71) according to any one of claims 1 to 8, wherein said meter (31) is a weight meter, and said metered quantity and said reference quantity are a metered weight of said fire-fighting substance (42) in said container (40) and a reference weight, respectively, each monitoring device (3, 5) being adapted to check when said metered weight is lower than said reference weight.

11. The monitoring apparatus (7, 71) according to any one of claims 1 to 10, wherein the remote control unit (6) is configured to transmit alarm signals by SMS to enabled telephones, by e-mail to a local network or to an external network via web, or by a data transmission to an enabled website.

12. The monitoring apparatus (7, 71) according to any one of claims 1 to 11, wherein the remote control unit (6) is configured to monitor and signal a removal of a fire-fighting equipment (4) from its intended seat.

13. The monitoring apparatus (71) according to any one of claims 1 to 11, the monitoring apparatus (71) being intended for checking state and condition of a plurality of fire-fighting equipments (4) placed inside a tunnel (80), wherein the monitoring apparatus (71) comprises a third receiver/transmitter (81) which is placed inside the tunnel (80) and is in a wireless communication with the plurality of monitoring devices (1, 3, 5), the third receiver/transmitter (81) being operatively connected, by means of a cable (82) to the remote control unit (6), the remote control unit (6) being located outside of the tunnel (80).

14. The monitoring apparatus (7, 71) according to any one of claims 1 to 13, further comprising a plurality of fire-fighting equipments (4), each one being associated to a respective monitoring device (1, 3, 5).

15. A method for a remote monitoring of a plurality of fire-fighting equipments (4), comprising the steps of:
- providing a plurality of fire-fighting equipments (4), each comprising a container (40) including a containing chamber (41) and a fire-fighting substance (42) in the containing chamber (41);
- providing a remote control unit (6) operatively connected to each of said plurality of fire-fighting equipments (4);
- for each fire-fighting equipment (4), metering a quantity related to said fire-fighting substance (42) in said containing chamber (41);
- transmitting a signal to the remote control unit (6) when the metered quantity is lower than a first reference quantity;
- actuating a first alarm element (12, 64, 65) at the remote control unit (6) when the metered quantity is lower than the first reference quantity;
**characterized in that**
the method further comprises the steps of:
- transmitting a signal to the remote control unit (6) when the metered quantity is lower than a second reference quantity, the second reference quantity being lower than the first reference quantity;
- actuating a second alarm element (13, 64, 65) at the remote control unit (6) when the metered quantity is lower than the second reference quantity,
wherein the actuation of the first alarm element (12, 64, 65) corresponds to an initial decay in efficiency of a fire-fighting equipment (4) and the actuation of the second alarm element (13) corresponds to a substantial unserviceability of the fire-fighting equipment (4).

## Patentansprüche

1. Eine Überwachungsvorrichtung (7, 71) für das Überprüfen des Zustands und der Verfassung von mehreren Feuerlöschgeräten (4), wobei jedes Feuerlöschgerät (4) derart ausgebildet ist, dass es einen Behälter (40) einer Feuerlöschsubstanz (42) umfasst und die Überwachungsvorrichtung (7, 71) mehrere Überwachungseinrichtungen (1, 3, 5) und eine Fernbedienungseinheit (6) umfasst, die mit jeder dieser Überwachungseinrichtungen (1, 3, 5) durch Mittel einer Signalübertragung in Wirkverbindung steht, wobei
jede Überwachungseinrichtung (1, 3, 5) derart ausgebildet ist, dass sie einem entsprechenden Feuerlöschgerät (4) zugeordnet ist und ein Messgerät (11, 31) für eine Menge umfasst, die der Feuerlöschsubstanz (42) in dem Behälter (40) entspricht,
die Fernbedienungseinheit (6) ein erstes Alarmelement (12, 64, 65) umfasst, welches in Wirkverbindung mit den Messgeräten (11, 31) steht und derart ausgebildet ist, dass es anzeigt, wenn die durch das Messgerät (11, 31) der mehreren Überwachungseinrichtungen (1, 3, 5) gemessene Menge niedriger ist als eine erste Referenzmenge,
**dadurch gekennzeichnet, dass**
die Fernbedienungseinheit (6) des Weiteren ein zweites Alarmelement (13, 64, 65) umfasst, welches in Wirkverbindung mit den Messgeräten (11, 31) steht und derart ausgebildet ist, dass es anzeigt, wenn die durch das Messgerät (11, 31) der mehreren Überwachungseinrichtungen (1, 3, 5) gemessene Menge niedriger ist als eine zweite Referenzmenge,
die zweite Referenzmenge niedriger ist als die erste Referenzmenge,
das Auslösen des ersten Alarmelements (12) einem Anfangsabfall an Effizienz eines Feuerlöschgeräts (4) entspricht und
das Auslösen des zweiten Alarmelements (13) einer körperlichen Nichtverfügbarkeit des Feuerlöschgeräts (4) entspricht.

2. Überwachungsvorrichtung (7, 71) gemäß Anspruch 1, wobei jede Überwachungseinrichtung (1, 3, 5) einen ersten drahtlosen Signalempfänger/-sender (51) umfasst, welcher mit dem Messgerät (11, 31) in Wirkverbindung steht, und
die Fernbedienungseinheit (6) einen zweiten drahtlosen Signalempfänger/-sender (61, 81) umfasst, wobei
die Signalübertragung eine drahtlose Übertragung zwischen den ersten drahtlosen Signalempfängern/-sendern (51) und dem zweiten drahtlosen Signalempfänger/-sender (61, 81) ist.

3. Überwachungsvorrichtung (7, 71) gemäß Anspruch 1 oder 2, wobei jede Überwachungseinrichtung (1, 3, 5) einen elektrischen Akkumulator (16) zur Energieversorgung und ein Messgerät (17) für einen Ladestand dieses elektrischen Akkumulators (16) umfasst, und
die Fernbedienungseinheit (6) ein drittes Alarmelement (18, 64, 65) umfasst, welches in Wirkverbindung mit den Messgeräten (17) steht und derart ausgebildet ist, dass es anzeigt, wenn der Ladestand, welcher durch eines dieser Messgeräte (17) gemessen wird, niedriger ist als ein Schwellenwert.

4. Überwachungsvorrichtung (7, 71) gemäß einem der Ansprüche 1, 2 oder 3, wobei
die Fernbedienungseinheit (6) einen Fernalarm (64) umfasst und derart ausgebildet ist, dass sie eine Auslösung dieses Fernalarms (64) steuert,
der Fernalarm (64) zumindest eines der ersten Alarmelemente (12, 65), der zweiten Alarmelemente (13, 65) und der dritten Alarmelemente (18, 65) umfasst, und die Fernbedienungseinheit (6) derart ausgebildet ist, dass sie eine Auslösung des zumindest einen der ersten Alarmelemente (12, 65), der zweiten Alarmelemente (13, 65) und der dritten Alarmelemente (18, 65) steuert.

5. Überwachungsvorrichtung (7, 71) gemäß einem der Ansprüche 1 bis 4, wobei jede Überwachungseinrichtung (1, 3, 5) ein erstes Alarmelement (12) umfasst, welches derart ausgebildet ist, dass es anzeigt, wenn die Menge, die durch das Messgerät (11, 31) gemessen wird, niedriger ist als die erste Referenzmenge, und
ein zweites Alarmelement (13) umfasst, welches derart ausgebildet ist, dass es anzeigt, wenn die Menge, die durch das Messgerät (11, 31) gemessen wird, niedriger ist als die zweite Referenzmenge.

6. Überwachungsvorrichtung (7, 71) gemäß einem der Ansprüche 1 bis 5, wobei jede Überwachungseinrichtung (1, 3, 5) einen elektrischen Akkumulator (16) zur Energieversorgung,
ein Messgerät (17) für einen Ladestand dieses elektrischen Akkumulators (16), und
ein drittes Alarmelement (18) umfasst, wobei
dieses dritte Alarmelement (18) derart ausgebildet ist, dass es anzeigt, wenn der Ladestand, welcher durch das Messgerät (17) gemessen wird, niedriger ist als ein Schwellenwert.

7. Überwachungsvorrichtung (7, 71) gemäß Anspruch 5 oder 6, wobei jede Überwachungseinrichtung (1, 3, 5) ein Gehäuse (10) umfasst, wobei zumindest eines der ersten Alarmelemente (12), der zweiten Alarmelemente (13) und der dritten Alarmelemente (18) in diesem Gehäuse (10) angeordnet ist.

8. Überwachungsvorrichtung (7, 71) gemäß einem der Ansprüche 1 bis 7, wobei zumindest eines der ersten Alarmelemente (12, 65), der zweiten Alarmelemente (13, 65) und der dritten Alarmelemente (18, 65) eine Lichtanzeige (152, 153, 154) umfasst.

9. Überwachungsvorrichtung (7, 71) gemäß einem der Ansprüche 1 bis 8, wobei das Messgerät (11) ein Druckmessgerät ist, und die gemessene Menge und die Referenzmenge ein gemessener Druck der Feuerlöschsubstanz (42) in dem Behälter (40) und ein dementsprechender Referenzdruck sind, und
jede Überwachungseinrichtung (1, 5) derart ausgebildet ist, dass sie überprüft, ob dieser gemessene Druck niedriger ist als der Referenzdruck.

10. Überwachungsvorrichtung (7, 71) gemäß einem der Ansprüche 1 bis 8, wobei das Messgerät (31) ein Gewichtsmessgerät ist, und die gemessene Menge und die Referenzmenge ein gemessenes Gewicht der Feuerlöschsubstanz (42) in dem Behälter (40) und ein dementsprechendes Referenzgewicht sind, und jede Überwachungseinrichtung (3, 5) derart ausgebildet ist, dass sie überprüft, ob dieses gemessene Gewicht niedriger ist als das Referenzgewicht.

11. Überwachungsvorrichtung (7, 71) gemäß einem der Ansprüche 1 bis 10, wobei die Fernbedienungseinheit (6) derart ausgebildet ist, dass sie Alarmsignale als SMS an geeignete Telefone, als E-Mail an ein lokales Netzwerk oder an ein externes Netzwerk über Internet, oder als eine Datenübertragung an eine geeignete Webseite überträgt.

12. Überwachungsvorrichtung (7, 71) gemäß einem der Ansprüche 1 bis 11, wobei die Fernbedienungseinheit (6) derart ausgebildet ist, dass sie die Entfernung eines Feuerlöschgeräts (4) von dessen bestimmungsgemäßem Ort überwacht und dieses anzeigt.

13. Überwachungsvorrichtung (71) gemäß einem der Ansprüche 1 bis 11, wobei die Überwachungsvorrichtung (71) derart ausgebildet ist, dass sie den Zustand und die Verfassung von mehreren Feuerlöschgeräten (4) überprüft, welche in einem Tunnel (80) angeordnet sind, wobei
die Überwachungsvorrichtung (71) einen dritten Empfänger/Sender (81) umfasst, welcher in dem Tunnel (80) angeordnet ist und drahtlos mit den mehreren Überwachungseinrichtungen (1, 3, 5) kommuniziert,
der dritte Empfänger/Sender (81) durch Mittel eines Kabels (82) mit der Fernbedienungseinheit (6) in Wirkverbindung steht, und
die Fernbedienungseinheit (6) außerhalb des Tunnels (80) angeordnet ist.

14. Überwachungsvorrichtung (7, 71) gemäß einem der Ansprüche 1 bis 13, welche des Weiteren mehrere Feuerlöschgeräte (4) umfasst, wobei jedes einzelne einer entsprechenden Überwachungseinrichtung (1, 3, 5) zugeordnet ist.

15. Verfahren für das drahtlose Überwachen von mehreren Feuerlöschgeräten (4), umfassend die Schritte:
- Vorsehen von mehreren Feuerlöschgeräten (4), wobei jedes einen Behälter (40) mit einer Behälterkammer (41) und eine Feuerlöschsubstanz (42) in der Behälterkammer (41) umfasst;
- Vorsehen einer Fernbedienungseinheit (6), welche mit jedem der mehreren Feuerlöschgeräte (4) in Wirkverbindung steht;
- für jedes Feuerlöschgerät (4) das Messen einer Menge, welche der Feuerlöschsubstanz (42) in der Behälterkammer (41) entspricht;
- Übertragen eines Signals an die Fernbedienungseinheit (6), wenn die gemessene Menge niedriger ist als eine erste Referenzmenge;
- Auslösen eines ersten Alarmelements (12, 64, 65) an der Fernbedienungseinheit (6), wenn die gemessene Menge niedriger ist als die erste Referenzmenge;
**dadurch gekennzeichnet, dass**
das Verfahren des Weiteren die folgenden Schritte umfasst:
- Übertragen eines Signals an die Fernbedienungseinheit (6), wenn die gemessene Menge niedriger ist als eine zweite Referenzmenge, wobei die zweite Referenzmenge niedriger ist als die erste Referenzmenge;
- Auslösen eines zweiten Alarmelements (13, 64, 65) an der Fernbedienungseinheit (6), wenn die gemessene Menge niedriger ist als die zweite Referenzmenge,
wobei das Auslösen des ersten Alarmelements (12, 64, 65) einem Anfangsabfall an Effizienz eines Feuerlöschgeräts (4) entspricht und
das Auslösen des zweiten Alarmelements (13) einer körperlichen Nichtverfügbarkeit des Feuerlöschgeräts (4) entspricht.

## Revendications

1. Appareil de surveillance (7, 71) pour vérifier l'état et la condition d'une pluralité d'équipements de lutte contre l'incendie (4), chaque équipement de lutte contre l'incendie (4) étant du type comprenant un contenant (40) d'une substance de lutte contre l'incendie (42), l'appareil de surveillance (7, 71) comprenant une pluralité de dispositifs de surveillance (1, 3, 5) et une unité de commande à distance (6) connectée de manière fonctionnelle à chacun desdits dispositifs de surveillance (1, 3, 5) au moyen d'une transmission de signal,
dans lequel chaque dispositif de surveillance (1, 3, 5) est conçu pour être associé à un équipement de lutte contre l'incendie (4) respectif et comprend un appareil de mesure (11, 31) d'une quantité associée à ladite substance de lutte contre l'incendie (42) dans ledit contenant (40),
l'unité de commande à distance (6) comprenant un premier élément d'alarme (12, 64, 65) connecté de manière fonctionnelle aux dits appareils de mesure (11, 31) et conçu pour émettre un signal lorsque la quantité mesurée par l'appareil de mesure (11, 31) d'un dispositif de surveillance (1, 3, 5) de ladite pluralité est inférieure à une première quantité de référence,
**caractérisé en ce que**
l'unité de commande à distance (6) comprend en outre un deuxième élément d'alarme (13, 64, 65) connecté de manière fonctionnelle aux dits appareils de mesure (11, 31) et conçu pour émettre un signal lorsque la quantité mesurée par l'appareil de mesure (11, 31) dudit dispositif de surveillance (1, 3, 5) de ladite pluralité est inférieure à une deuxième quantité de référence,
la deuxième quantité de référence étant inférieure à la première quantité de référence,
l'actionnement du premier élément d'alarme (12) correspondant à une diminution initiale d'efficacité d'un équipement de lutte contre l'incendie (4) et l'actionnement du deuxième élément d'alarme (13) correspondant à une importante incapacité de fonctionner de l'équipement de lutte contre l'incendie (4).

2. Appareil de surveillance (7, 71) selon la revendication 1, dans lequel chaque dispositif de surveillance (1, 3, 5) comprend un premier récepteur/émetteur de signal sans fil (51) connecté de manière fonctionnelle au dit appareil de mesure (11, 31) et ladite unité de commande à distance (6) comprend un deuxième récepteur/émetteur de signal sans fil (61, 81), ladite transmission de signal étant une transmission sans fil entre les premiers récepteurs/émetteurs de signal sans fil (51) et le deuxième récepteur/émetteur de signal sans fil (61, 81).

3. Appareil de surveillance (7, 71) selon la revendication 1 ou 2, dans lequel chaque dispositif de surveillance (1, 3, 5) comprend un accumulateur électrique de fourniture de puissance (16) et un dispositif de mesure (17) d'un niveau de charge dudit accumulateur électrique (16), l'unité de commande à distance (6) comprenant un troisième élément d'alarme (18, 64, 65) connecté de manière fonctionnelle aux dits dispositifs de mesure (17) et conçu pour émettre un signal lorsque le niveau de charge mesuré par l'un desdits dispositifs de mesure (17) est inférieur à un niveau de seuil.

4. Appareil de surveillance (7, 71) selon la revendication 1, 2 ou 3, dans lequel ladite unité de commande à distance (6) comprend une alarme à distance (64) et est configurée pour commander un actionnement de ladite alarme à distance (64),
l'alarme à distance (64) comprenant au moins l'un parmi ledit premier élément d'alarme (12, 65), ledit deuxième élément d'alarme (13, 65) et ledit troisième élément d'alarme (18, 65), ladite unité de commande à distance (6) étant configurée pour commander un actionnement dudit au moins un dudit premier élément d'alarme (12, 65), dudit deuxième élément d'alarme (13, 65) et dudit troisième élément d'alarme (18, 65).

5. Appareil de surveillance (7, 71) selon l'une quelconque des revendications 1 à 4, dans lequel chaque dispositif de surveillance (1, 3, 5) comprend un premier élément d'alarme (12), qui est conçu pour émettre un signal lorsque la quantité mesurée par l'appareil de mesure (11, 31) est inférieure à la première quantité de référence, et un deuxième élément d'alarme (13), qui est conçu pour émettre un signal lorsque la quantité mesurée par l'appareil de mesure (11, 31) est inférieure à la deuxième quantité de référence.

6. Appareil de surveillance (7, 71) selon l'une quelconque des revendications 1 à 5, dans lequel chaque dispositif de surveillance (1, 3, 5) comprend un accumulateur électrique de fourniture de puissance (16), un dispositif de mesure (17) d'un niveau de charge dudit accumulateur électrique (16) et un troisième élément d'alarme (18), dans lequel ledit troisième élément d'alarme (18) est conçu pour émettre un signal lorsque le niveau de charge mesuré par ledit dispositif de mesure (17) est inférieur à un niveau de seuil.

7. Appareil de surveillance (7, 71) selon la revendication 5 ou 6, dans lequel chaque dispositif de surveillance (1, 3, 5) comprend un boîtier (10), dans lequel au moins l'un parmi ledit premier élément d'alarme (12), ledit deuxième élément d'alarme (13) et ledit troisième élément d'alarme (18) est associé au dit boîtier (10).

8. Appareil de surveillance (7, 71) selon l'une quelconque des revendications 1 à 7, dans lequel au moins l'un parmi ledit premier élément d'alarme (12, 65), ledit deuxième élément d'alarme (13, 65) et ledit troisième élément d'alarme (18, 65) comprend un voyant (152, 153, 154).

9. Appareil de surveillance (7, 71) selon l'une quelconque des revendications 1 à 8, dans lequel ledit appareil de mesure (11) est un appareil de mesure de pression, et ladite quantité mesurée et ladite quantité de référence sont une pression mesurée de ladite substance de lutte contre l'incendie (42) dans ledit contenant (40) et une pression de référence, respectivement, chaque dispositif de surveillance (1, 5) étant conçu pour contrôler si ladite pression mesurée est inférieure à ladite pression de référence.

10. Appareil de surveillance (7, 71) selon l'une quelconque des revendications 1 à 8, dans lequel ledit appareil de mesure (31) est une balance, et ladite quantité mesurée et ladite quantité de référence sont un poids mesuré de ladite substance de lutte contre l'incendie (42) dans ledit contenant (40) et un poids de référence, respectivement, chaque dispositif de surveillance (3, 5) étant conçu pour contrôler si ledit poids mesuré est inférieur au dit poids de référence.

11. Appareil de surveillance (7, 71) selon l'une quelconque des revendications 1 à 10, dans lequel l'unité de commande à distance (6) est configurée pour transmettre des signaux d'alarme par SMS à des téléphones autorisés, par un courrier électronique à un réseau local ou à un réseau externe par l'intermédiaire du Web, ou par une transmission de données à un site Web autorisé.

12. Appareil de surveillance (7, 71) selon l'une quelconque des revendications 1 à 11, dans lequel l'unité de commande à distance (6) est configurée pour surveiller et signaler un retrait d'un équipement de lutte contre l'incendie (4) de son support attendu.

13. Appareil de surveillance (71) selon l'une quelconque des revendications 1 à 11, l'appareil de surveillance (71) étant destiné à vérifier l'état et la condition d'une pluralité d'équipements de lutte contre l'incendie (4) placés à l'intérieur d'un tunnel (80), dans lequel l'appareil de surveillance (71) comprend un troisième récepteur/émetteur (81) qui est placé à l'intérieur du tunnel (80) et qui est en communication sans fil avec la pluralité de dispositifs de surveillance (1, 3, 5), le troisième récepteur/émetteur (81) étant connecté de manière fonctionnelle, au moyen d'un câble (82), à l'unité de commande à distance (6), l'unité de commande à distance (6) étant située à l'extérieur du tunnel (80).

14. Appareil de surveillance (7, 71) selon l'une quelconque des revendications 1 à 13, comprenant en outre une pluralité d'équipements de lutte contre l'incendie (4), chacun étant associé à un dispositif de surveillance (1, 3, 5) respectif.

15. Procédé pour une surveillance à distance d'une pluralité d'équipements de lutte contre l'incendie (4), comprenant les étapes :
- de fourniture d'une pluralité d'équipements de lutte contre l'incendie (4), comprenant chacun un contenant (40) comprenant une chambre de contenant (41) et une substance de lutte contre l'incendie (42) dans la chambre de contenant (41) ;
- de fourniture d'une unité de commande à distance (6) connectée de manière fonctionnelle à chacun de ladite pluralité d'équipements de lutte contre l'incendie (4) ;
- pour chaque équipement de lutte contre l'incendie (4), de mesure d'une quantité associée à ladite substance de lutte contre l'incendie (42) dans ladite chambre de contenant (41) ;
- de transmission d'un signal à l'unité de commande à distance (6) lorsque la quantité mesurée est inférieure à une première quantité de référence ;
- d'actionnement d'un premier élément d'alarme (12, 64, 65) au niveau de l'unité de commande à distance (6) lorsque la quantité mesurée est inférieure à la première quantité de référence ;
**caractérisé en ce que**
le procédé comprend en outre les étapes :
- de transmission d'un signal à l'unité de commande à distance (6) lorsque la quantité mesurée est inférieure à une deuxième quantité de référence, la deuxième quantité de référence étant inférieure à la première quantité de référence ;
- d'actionnement d'un deuxième élément d'alarme (13, 64, 65) au niveau de l'unité de commande à distance (6) lorsque la quantité mesurée est inférieure à la deuxième quantité de référence,
dans lequel l'actionnement du premier élément d'alarme (12, 64, 65) correspond à une diminution initiale d'efficacité d'un équipement de lutte contre l'incendie (4) et l'actionnement du deuxième élément d'alarme (13) correspond à une importante incapacité de fonctionner de l'équipement de lutte contre l'incendie (4).
